# EUROPEAN PATENT SPECIFICATION

(11) **EP 3 322 555 B1**
(45) Date of publication and mention of the grant of the patent: **09.12.2026**
(21) Application number: 16745282.0
(22) Date of filing: 06.07.2016
(51) Int. Cl.: B23K 35/36, B23K 26/00

(54) **FLUX FOR ADDITIVE MANUFACTURING**
FLUSSMITTEL FÜR DIE GENERATIVE FERTIGUNG
FLUX POUR LA FABRICATION ADDITIVE

(30) Priority: 16.07.2015 US 201514800784
(43) Date of publication of application: 23.05.2018
(73) Proprietor: Siemens Energy, Inc., Orlando, FL 32826-2399 (US)
(72) Inventor: BRUCK, Gerald J., Pigeon Forge,TN 37863 (US); KAMEL, Ahmed, Orlando, Florida 32828 (US)
(74) Representative: Isarpatent
(86) International application number: PCT/US2016/041097
(87) International publication number: WO 2017/011241

(56) References cited:
- EP-A1- 1 731 258
- EP-A1- 2 376 502
- EP-A1- 3 098 021
- GB-A- 2 174 109
- GB-A- 413 141
- GB-A- 513 695
- GB-A- 733 816
- SU-A1- 1 611 666
- US-A- 2 179 258
- US-A- 2 548 690
- US-A- 2 788 303
- US-A- 3 497 400
- US-A1- 2014 120 370
- US-A1- 2015 027 994
- US-A1- 2015 102 016
- US-B1- 6 242 609
- LIU JIUMING ET AL: "Synthesis and characterization of ?-phase silicon nitride powders by direct nitridation", vol. 631, 1 January 2013 (2013-01-01), pages 434 - 436, XP009519691, ISSN: 1022-6680, Retrieved from the Internet <URL:https://doi.org/10.4028/www.scientific.net/AMR.631-632.434?nosfx=y> [retrieved on 20200430], DOI: 10.4028/WWW.SCIENTIFIC.NET/AMR.631-632.434

## Description

### FIELD OF THE INVENTION

The invention relates to additive manufacturing and repair of metal components, and to a flux that generates gaseous protection from the atmosphere while avoiding the formation of more than 5 wt% slag during the deposition of superalloy material.

### BACKGROUND OF THE INVENTION

Additive manufacturing and repair typically involves:
1. Spreading a layer of metal filler powder over a working surface;
2. Traversing an energy beam over the powder to melt it, creating a new working surface; and
3. Repeating from step 1 until the component is built or restored.

This process is often conducted under a blanket of an inert gas such as argon to protect the melt pool from oxidation and to protect the powder from hydration. Flux may be added to the metal powder to cleanse the melt of contaminants, thereby forming slag that solidifies on top of the deposited material, thereby continuing to provide protection from oxidation if the blanket of inert gas dissipates before the deposited material is sufficiently cooled. However, slag can interfere with the energy beam, and the solidified slag must be removed between layering steps, so additive manufacturing and repair is inconvenienced and slowed by slag formation.

Superalloy materials are difficult to fabricate and repair due to their high melting points and susceptibility to weld solidification cracking and strain age cracking. They can have melting point ranges of 1200 to 1400°C and higher, and are used for components in the hot gas path in gas turbine engines. A superalloy is a highly corrosion and oxidation resistant alloy with excellent mechanical strength and resistance to creep at high temperatures. A superalloy usually includes combinations of Ni, Co, Cr, and sometimes Fe, plus lesser amounts of W, Mo, Ta, Nb, Ti, and Al. Nickel-based superalloys contain more nickel than any other constituent - usually at least 40 wt. % Ni -- and may contain little or no Fe or Co. Examples of superalloys include alloys sold under the trademarks and brand names Hastelloy, Inconel alloys (e.g. IN 738, IN 792, IN 939), Rene alloys (e.g. Rene N5, Rene 41, Rene 80, Rene 108, Rene 142, Rene 220), Haynes alloys (282), Mar M, CM 247, CM 247 LC, C263, 718, X-750, ECY 768, 282, X45, PWA 1480, PWA 1483, PWA 1484, CMSX single crystal alloys (e.g., CMSX-4, CMSX-8, CMSX-10), GTD 111, GTD 222, MGA 1400, MGA 2400, PSM 116, IN 713C, Mar-M-200, IN 100, IN 700, Udimet 600, Udimet 500 and titanium aluminide.

US 2015/0027994 A1 describes a flux sheet for laser processing and restoration of metal components. US 2015/0102016 A1 concerns the use of a flux during laser processing of reflective metals, in particular to facilitate coupling of the laser energy into the workpiece. EP 1 731 258 A1 relates to a submerged-arc welding flux.

GB 2 174 109 A describes an aqueous halide-based flux for soldering with zinc-based solder alloys. US 2014/0120370 A1 concerns chloride-containing flux compositions used before hot-dip galvanizing steel products with zinc-aluminium or zinc-aluminium-magnesium alloys. US 2 788 303 A, US 3 497 400 A, GB 733 816 A, US 2 548 690 A, US 2 179 258 A, GB 413 141 A and GB 513 695 A concern various flux compositions and agents for soldering, tinning, zinc coating, welding or brazing metals, including aluminium. SU 1 611 666 A1 relates to a flux for contact fluxing. EP 3 098 021 A1 describes a tin-chloride-based flux paste for soft soldering aluminium, which may additionally contain ammonium chloride, sodium fluoride and zinc chloride.

### BRIEF DESCRIPTION OF THE DRAWINGS

The invention is explained in the following description in view of the drawings that show:
FIG. 1 is a schematic sectional view of apparatus in process of laser additive manufacturing illustrating aspects of an embodiment and use of the invention.
FIG. 2 is a schematic sectional view of alternate apparatus in process of laser additive manufacturing illustrating aspects of an embodiment and use of the invention.

### DETAILED DESCRIPTION OF THE INVENTION

The present invention provides as a first aspect a flux (55) for use during laser deposition of material, the flux comprising at least one constituent which, when heated during a laser deposition process, produces at least one gas (46) that is heavier than air, and wherein not more than 5 wt % of the flux becomes slag upon cooling after the laser deposition process, wherein the flux comprises: 10 - 60 wt % selected from one or more carbonates; 10 - 60 wt % selected from one or more metal halides; and 10 - 30 wt % NH₄Cl.

Preferably, the flux comprises: 10 - 60 wt % carbonate selected from one or more of H₂CO₃, LiCO₃, Na₂CO₃, NaHCO₃, Na₃H(CO₃)₂, K₂CO₃, KHCO₃, Rb₂CO₃, Cs₂CO₃, CsHCO₃, BeCO₃, MgCO₃, Mg(HCO₃)₂, CaCO₃, Ca(HCO₃)₂, SrCO₃, BaCO₃, La₂(CO₃)₃, UO₂CO₃, MnCO₃, FeCO₃, CoCO₃, NiCO₃, CuCO₃, Ag₂CO₃, ZnCO₃, CdCO₃, Al₂(CO₃)₃, Tl₂CO₃, PbCO₃, (NH₄)₂CO₃, NH₄HCO₃, and (BiO)₂CO₃ used primarily for shielding and metallic alloying; 10 - 60 wt % metallic halide selected from one or more of AlF₃, MnF₂, CoF₂, NiF₂, TiCl₄, CrCl₆, and MnCl₄; 10 - 30 wt % NH₄Cl; and one mole of carbon for each two moles of free oxygen released by thermal decomposition of any other constituents of the flux.

The present invention further provides as a second aspect a combined filler and flux material (24) for laser processing of a superalloy weld or fabrication deposit, the combined filler and flux material comprising: a superalloy filler material; and the flux material according to the first aspect, effective to form a blanket of said at least one gas (46) on the deposit, wherein not more than 5 wt % of the flux becomes slag on the deposit upon cooling.

The inventors have formulated fluxes that generate gaseous protection from the atmosphere while avoiding the formation of slag. The flux may be mixed with metal filler powder or spread on top of the metal power with mixing occurring in the melt pool. The flux has one or more constituents which, when heated close to a liquid temperature of the metal powder, produce one or more gasses, typically heavier than air, that produce a blanket on the deposit. Not more than 5 wt % of the flux becomes slag. The remainder either becomes a gas or an alloy addition to the metal deposit. Because little or none of the flux becomes slag, it is not necessary to interrupt the deposition process in order to remove slag after each layer of material is deposited. For embodiments where some slag is produced, the amount of slag may be sufficiently low and its thickness may be sufficiently thin such that it need not be removed, simply being remelted upon the deposition of the next layer of material. In such embodiments, a cumulative amount of flux may need to be removed only after a plurality of layers of material are deposited, such as every other layer, or every third or fifth layer, for examples.

Inert gases that are heavier than air are advantageous for shielding, since they displace air near the working surface and in the processing chamber. Table A below lists densities of various gases at standard temperature and pressure that are generated by heating certain flux materials compared to the densities of air and argon.

**TABLE A**

| GAS | Density kg/m³ |
|---|---|
| Air (ref) | 1.293 |
| Ar (ref) | 1.784 |
| H₂ | 0.090 |
| N₂ | 1.251 |
| CO | 1.250 |
| CO₂ | 1.977 |
| F₂ | 1.696 |
| Cl₂ | 3.2 |

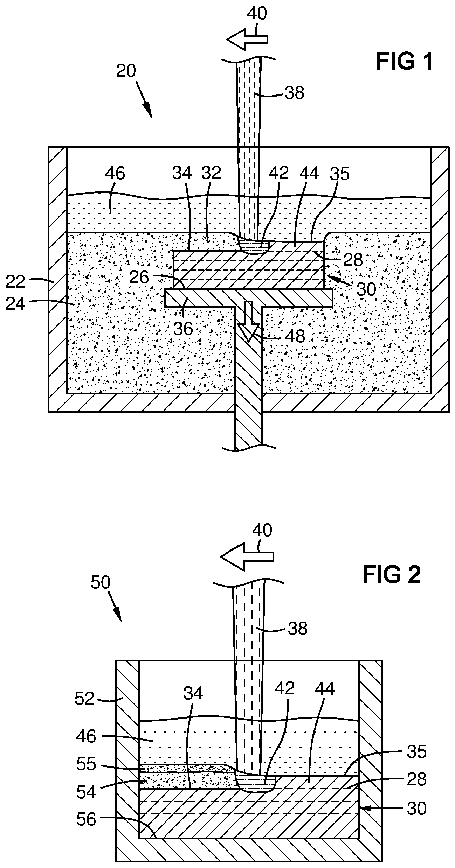

FIG 1 shows an apparatus 20 for laser additive manufacturing illustrating aspects of an embodiment and use of the invention. A chamber 22 contains a powder 24 that combines filler metal and flux. A movable working surface 26 supports an accumulation of metal layers 28 that form a component 30. A layer 32 of the filler metal and flux powder is spread on the working surface 26 of the build platform 36 then on successive working surfaces 34, 35 on successive layers. A laser beam 38 is traversed 40 across the filler metal and flux powder, creating a melt pool 42 that solidifies 44 to create a further metal layer. In accordance with the invention, the flux generates one or more protective gasses 46 that form a blanket over the melt pool and the solidifying metal layer deposit 44. Then another layer of mixed filler metal and flux powder (or a distinct layer of filler metal powder and another distinct layer of flux powder) is spread on the new working surface 34. The build platform 36 may be lowered 48 below the powder level in the chamber after each layer is added, so the powder can be easily spread on the new working surface 34 for repetition of the process.

The fluxes described herein are slag-free, or nearly slag free, producing not over 5 wt % slag relative to the weight of the flux, and providing a protective gas shield. The flux may be combined with the filler material for superalloy processing, either by mixing of flux and filler material particles, or by particle coating, or by compounding, and can be produced as a powder, paste, putty or other useful form. The filler material may constitute a superalloy powder, or a mixture of superalloy constituent powders, such as for example a nickel based superalloy including at least 40 wt % Ni or other metallic or ceramic materials as may be used to coat a superalloy (e.g. a bond coating or thermal barrier coating). The flux may contribute elemental constituents to the superalloy filler material as later described, thus completing the superalloy or oversupplying one or more elements to restore elemental proportions in an operationally degraded surface.

FIG 2 shows another apparatus 50 for laser additive manufacturing, illustrating aspects of an embodiment and use of the invention. A metal filler powder 54 is spread on a working surface which is initially a surface 56 on a build platform or chamber 52, and then on successive working surfaces 34, 35 on successive layers 28. A flux 55 is spread on the filler powder 54. A laser beam 38 is traversed 40 across the flux and filler powder, creating a melt pool 42 that solidifies 44 to create a further metal layer. The flux and filler materials mix in the melt pool. In accordance with the invention, the flux generates one or more protective gasses 46 that form a blanket over the melt pool and the solidifying metal layer deposit 44. Alternately, not shown, the initial working surface may be a surface of an existing component being repaired or restored.

In either FIG 1 or FIG 2, the filler powder and/or the flux may be graded across the geometry of the component slice and/or changed layer by layer during the building process to provide a gradient of constituents, for example providing a hard and/or corrosion resistant outer surface on a stronger inner substrate of a component.

Select metal oxides can be used as flux for processing superalloys, including Al₂O₃, SiO₂, TiO₂, MnO, MgO, and Cr₂O₃. When these metal oxides are exposed to the high power density of a laser beam and/or are heated to a liquid temperature of the superalloy, such as 1200-1500°C (2200-2700°F), they decompose into oxygen and metal elements. Refractory metal oxides in the flux may be decomposed in a plasma formed by the laser beam at a much higher temperature than the superalloy melting point, for example as in the following decomposition reaction:

2Al₂O₃ + 3 C → 4 Al + 3 CO₂

Such decomposition may be catalyzed by elements in the melt pool. If the metal is a constituent of the alloy being processed, it contributes to the metal deposit rather than slag. If carbon is added to the flux, the released oxygen combines with the carbon to generate CO₂ and/or CO, which are protective. CO₂ is advantageous because it is denser than air. It is denser than, and therefore superior to, argon in this respect. In one embodiment, carbon may be included in the flux in stoichiometric proportion to the oxygen in the metal oxide to create CO₂ and therefore without excessive addition of carbon to the metal deposit. For example three moles of carbon (about 36 g) may be provided for every two moles of Al₂O₃ (about 204 g), thus ideally producing only aluminum and CO₂ at the melt pool temperature. This provides a ratio of one mole of carbon for every two moles of free oxygen after decomposition of Al₂O₃ at the liquid temperature of the superalloy. Fluxes that provide gaseous protection plus an elemental addition to the deposit thus provide dual functions of protection and alloy enhancement. Alloy enhancement is useful for example when a gas turbine component surface is operationally depleted of aluminum or another constituent. Alternately, the filler metal may have intentional proportion deficiencies to be completed by the flux.

Another group of gas-producing flux constituents are carbonates, including H₂CO₃, LiCO₃, Na₂CO₃, NaHCO₃, Na₃H(CO₃)₂, K₂CO₃, KHCO₃, Rb₂CO₃, Cs₂CO₃, CsHCO₃, BeCO₃, MgCO₃, Mg(HCO₃)₂, CaCO₃, Ca(HCO₃)₂, SrCO₃, BaCO₃, La₂(CO₃)₃, UO₂CO₃, MnCO₃, FeCO₃, CoCO₃, NiCO₃, CuCO₃, Ag₂CO₃, ZnCO₃, CdCO₃, Al₂(CO₃)₃, Tl₂CO₃, PbCO₃, (NH₄)₂CO₃, NH₄HCO₃, and (BiO)₂CO₃. Shielding provided by these carbonates is derived from the generation of CO, CO₂, and, and in some cases, H₂ and N₂. Some of these carbonates initially decompose into a metal oxide plus CO₂. Then the metal oxide further decomposes to metal and oxygen as described above. Carbon can be added to the flux as described above to enhance CO₂ production. If the carbonate includes a constituent of the deposit alloy, it can contribute to the deposit so that no slag is produced. For example, Al₂(CO₃)₃, MnCO₃, MgCO₃, Mg(HCO₃)₂, may be used for this. Alternately, if the carbonate fully decomposes into gases at the temperature of the laser induced plasma and/or melt pool, no slag is produced. Fe, Cu, Zn, and Pb can degrade the properties of nickel-based superalloys, so these elements can be excluded from the flux used for such alloys, although they may be permitted in fluxes for other materials. In one embodiment the flux may contain less than 0.35 wt % of a total of Fe, Cu, Zn, and Pb. In another embodiment the total metal addition may contain less wt. % than 0.25 Fe, 0.10 Cu, 0.0005 Pb, and 0.001 Zn, and may be further limited to wt. % maximums of 0.015 P and 0.010 S.

Flux constituents that generate a halide gas are beneficial in some embodiments. Chlorine and fluorine gases are heavier than air as shown in Table A. Metal halides such as AlF₃, MnF₂, CoF₂, NiF₂, TiCl₄, CrCl₆, and MnCl₄ thermally decompose to generate a heavier-than-air blanket for shielding while simultaneously providing a metal alloying function in a slag-free fashion.

Nonmetallic halides may provide beneficial flux constituents in some embodiments. For example, NH₄Cl₃ reacts with metal oxides on the working surface, thereby cleaning the surface and forming volatile metal chlorides without slag.

Flux constituents that generate hydrogen and fluorine, are beneficial in some embodiments, because these gases interact with sulfur and phosphorous in the melt pool to generate new gases that can escape the deposit. This cleans the deposit of sulfur and phosphorous. Examples of such cleansing gases include H₂S, CH₃SH, PH₃ and PF₃. The H, C and F of these gases are introduced by flux constituent decompositions, such as NH₄Cl and H₂CO₃ that contribute H, carbonates that contribute C, and metal halides that can contribute F. The tramp sulphur and phosphorous in the melt react with the H, C and/or F to produce the cleansing gases which then escape the deposit.

Flux embodiments may be formulated for a combination of benefits, for example a flux embodiment may comprise:
10 - 60 wt % carbonate selected from one or more of H₂CO₃, LiCO₃, Na₂CO₃, NaHCO₃, Na₃H(CO₃)₂, K₂CO₃, KHCO₃, Rb₂CO₃, Cs₂CO₃, CsHCO₃, BeCO₃, MgCO₃, Mg(HCO₃)₂, CaCO₃, Ca(HCO₃)₂, SrCO₃, BaCO₃, La₂(CO₃)₃, UO₂CO₃, MnCO₃, FeCO₃, CoCO₃, NiCO₃, CuCO₃, Ag₂CO₃, ZnCO₃, CdCO₃, Al₂(CO₃)₃, Tl₂CO₃, PbCO₃, (NH₄)₂CO₃, NH₄HCO₃, and (BiO)₂CO₃ used primarily for shielding and metallic alloying,
10 - 60 wt % metallic halide selected from one or more of AlF₃, MnF₂, CoF₂, NiF₂, TiCl₄, CrCl₆, and MnCl₄used primarily for scavenging and vaporizing impurities from the deposit and metallic alloying,
10 - 30 wt % nonmetallic halide NH₄Cl for scavenging and vaporizing impurities from the deposit; and
one mole of carbon for each two moles of free oxygen released by thermal decomposition of any other flux constituents in the plasma and/or at the temperature of the melt pool, if any.

Embodiments of slag free processing in accordance with aspects of the invention may be applied to superalloys having nickel, cobalt or another element as the largest constituent. Embodiments may also be applied to a bond coat of a thermal barrier coating system of the form MCrAlY, where M represents Co or Ni. Furthermore, it may be extended beyond additive manufacturing and beyond processing of metal alloys. For example, coating of parts with ceramics may be achieved with fluxes tailored to provide the appropriate atmosphere for a specific coating yet leaving no or little slag residue on the surface. Thermal barrier coatings such as zirconia and hafnia have been sintered in the presence of small quantities of traditional fluxing agents such as silica, alumina, iron oxide, calcium oxide, and magnesium oxide.

## Claims

1. A flux (55) for use during laser deposition of material, the flux comprising at least one constituent which, when heated during a laser deposition process, produces at least one gas (46) that is heavier than air, and wherein not more than 5 wt % of the flux becomes slag upon cooling after the laser deposition process, wherein the flux comprises:
10 - 60 wt % selected from one or more carbonates;
10 - 60 wt % selected from one or more metal halides; and
10 - 30 wt % NH₄Cl.

2. The flux of claim 1, wherein the flux comprises:
10 - 60 wt % carbonate selected from one or more of H₂CO₃, LiCO₃, Na₂CO₃, NaHCO₃, Na₃H(CO₃)₂, K₂CO₃, KHCO₃, Rb₂CO₃, Cs₂CO₃, CsHCO₃, BeCO₃, MgCO₃, Mg(HCO₃)₂, CaCO₃, Ca(HCO₃)₂, SrCO₃, BaCO₃, La₂(CO₃)₃, UO₂CO₃, MnCO₃, FeCO₃, CoCO₃, NiCO₃, CuCO₃, Ag₂CO₃, ZnCO₃, CdCO₃, Al₂(CO₃)₃, Tl₂CO₃, PbCO₃, (NH₄)₂CO₃, NH₄HCO₃, and (BiO)₂CO₃ used primarily for shielding and metallic alloying,
10 - 60 wt % metallic halide selected from one or more of AlF₃, MnF₂, CoF₂, NiF₂, TiCl₄, CrCl₆, and MnCl₄;
10 - 30 wt % NH₄Cl; and
one mole of carbon for each two moles of free oxygen released by thermal decomposition of any other constituents of the flux.

3. A combined filler and flux material (24) for laser processing of a superalloy weld or fabrication deposit, the combined filler and flux material comprising:
a superalloy filler material; and
the flux material of claim 1 or 2, effective to form a blanket of said at least one gas (46) on the deposit, wherein not more than 5 wt % of the flux becomes slag on the deposit upon cooling.

## Patentansprüche

1. Flussmittel (55) zur Verwendung während Laserabscheidung von Material, wobei das Flussmittel wenigstens einen Bestandteil umfasst, der bei Erhitzung während eines Laserabscheidungsverfahrens wenigstens ein Gas (46) erzeugt, das schwerer als Luft ist, und wobei nicht mehr als 5 Gew.-% des Flussmittels bei Abkühlen nach dem Laserabscheidungsverfahren zu Schlacke werden, wobei das Flussmittel umfasst:
10 - 60 Gew.-% ausgewählt aus einem oder mehreren Carbonaten;
10 - 60 Gew.-% ausgewählt aus einem oder mehreren Metallhalogeniden; und
10 - 30 Gew.-% NH₄Cl.

2. Flussmittel nach Anspruch 1, wobei das Flussmittel umfasst:
10 - 60 Gew.-% Carbonat ausgewählt aus einem oder mehreren von H₂CO₃, LiCO₃, Na₂CO₃, NaHCO₃, Na₃H(CO₃)₂, K₂CO₃, KHCO₃, Rb₂CO₃, Cs₂CO₃, CsHCO₃, BeCO₃, MgCO₃, Mg(HCO₃)₂, CaCO₃, Ca(HCO₃)₂, SrCO₃, BaCO₃, La₂(CO₃)₃, UO₂CO₃, MnCO₃, FeCO₃, CoCO₃, NiCO₃, CuCO₃, Ag₂CO₃, ZnCO₃, CdCO₃, Al₂(CO₃)₃, Tl₂CO₃, PbCO₃, (NH₄)₂CO₃, NH₄HCO₃ und (BiO)₂CO₃, hauptsächlich zur Abschirmung und Metalllegierung verwendet,
10 - 60 Gew.-% Metallhalogenid ausgewählt aus einem oder mehreren von AlF₃, MnF₂, CoF₂, NiF₂, TiCl₄, CrCl₆ und MnCl₄;
10 - 30 Gew.-% NH₄Cl; und
je ein Mol Kohlenstoff für je zwei Mol an freiem Sauerstoff, der durch thermische Zersetzung von anderen Bestandteilen des Flussmittels freigesetzt wird.

3. Kombiniertes Füllstoff- und Flussmittelmaterial (24) zur Laserverarbeitung einer Superlegierungsschweißung oder Fertigungsablagerung, wobei das kombinierte Füllstoff- und Flussmittelmaterial umfasst:
ein Superlegierungs-Füllstoffmaterial; und
das Flussmittelmaterial nach Anspruch 1 oder 2, das wirksam ist, eine Decke des wenigstens einen Gases (46) auf der Abscheidung zu bilden, wobei nicht mehr als 5 Gew.-% des Flussmittels bei Abkühlen zu Schlacke auf der Abscheidung wird.

## Revendications

1. Flux (55) destiné à être utilisé pendant le dépôt laser de matière, le flux comprenant au moins un constituant qui, lorsqu'il est chauffé pendant un processus de dépôt laser, produit au moins un gaz (46) qui est plus lourd que l'air, et dans lequel pas plus de 5 % en poids du flux devient du laitier lors du refroidissement après le processus de dépôt laser, dans lequel le flux comprend :
10 à 60 % en poids choisis parmi un ou plusieurs carbonates ;
10 à 60 % en poids choisis parmi un ou plusieurs halogénures métalliques ; et
10 - 30 % en poids de NH₄Cl.

2. Flux selon la revendication 1, dans lequel le flux comprend :
10 à 60 % en poids de carbonate choisi parmi un ou plusieurs parmi H₂CO₃, LiCO₃, Na₂CO₃, NaHCO₃, Na₃H(CO₃)₂, K₂CO₃, KHCO₃, Rb₂CO₃, Cs₂CO₃, CsHCO₃, BeCO₃, MgCO₃, Mg(HCO₃)₂, CaCO₃, Ca(HCO₃)₂, SrCO₃, BaCO₃, La₂(CO₃)₃, UO₂CO₃, MnCO₃, FeCO₃, CoCO₃, NiCO₃, CuCO₃, Ag₂CO₃, ZnCO₃, CdCO₃, Al₂(CO₃)₃, Tl₂CO₃, PbCO₃, (NH₄)₂CO₃, NH₄HCO₃, et (BiO)₂CO₃ utilisés principalement pour un blindage et un alliage métallique,
10 à 60 % en poids d'halogénure métallique choisi parmi un ou plusieurs parmi AlF₃, MnF₂, CoF₂, NiF₂, TiCl₄, CrCl₆, et MnCl₄ ;
10 - 30 % en poids de NH₄Cl ; et
une mole de carbone pour chaque deux moles d'oxygène libre libérées par décomposition thermique de quelconques autres constituants du flux.

3. Matière combinée de charge et de flux (24) pour le traitement laser d'un soudage de superalliage ou d'un dépôt de fabrication, la matière combinée de charge et de flux comprenant :
une matière de charge de superalliage ; et
la matière de flux selon la revendication 1 ou 2, efficace pour former une couverture dudit au moins un gaz (46) sur le dépôt, dans laquelle pas plus de 5 % en poids du flux devient du laitier sur le dépôt lors du refroidissement.
